# EUROPEAN PATENT APPLICATION

(11) **EP 4 372 278 A1**
(43) Date of publication of application: **22.05.2024**
(21) Application number: 22842137.6
(22) Date of filing: 13.07.2022
(51) Int. Cl.: F23G 5/50, G06T 7/00

(54) **INFORMATION PROCESSING METHOD, INFORMATION PROCESSING DEVICE, AND INFORMATION PROCESSING PROGRAM**

(30) Priority: 13.07.2021 JP 2021115537
(71) Applicant: Ebara Environmental Plant Co., Ltd., Tokyo 144-0042 (JP); Ridge-I Inc., Tokyo 100-0004 (JP)
(72) Inventor: TOMARU, Haruyuki, Tokyo 144-0042 (JP); MACHIDA, Junya, Tokyo 144-0042 (JP); ITO, Kazuya, Tokyo 144-0042 (JP); KAWACHI, Takahiro, Tokyo 144-0042 (JP); MATSUOKA, Kei, Tokyo 144-0042 (JP); KOMATSU, Takayoshi, Tokyo 100-0004 (JP); ICHIKI, Kazuki, Tokyo 100-0004 (JP); IZAWA, Ryohei, Tokyo 100-0004 (JP); KIMURA, Masanari, Tokyo 100-0004 (JP)
(74) Representative: Schmidbauer, Andreas Konrad
(86) International application number: PCT/JP2022/027504
(87) International publication number: WO 2023/286795

(57) **Abstract**

An information processing method for generating an identification algorithm that identifies types of waste material includes a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types, and a step of generating a second model that is an identification algorithm that supports waste material of a second facility different from the plurality of facilities by additionally learning second image data obtained by capturing an image of inside of a waste pit of the second facility and second training data in which respective pieces of waste material in the image are labeled with types, with respect to the generated first model.

## Description

### Technical Field

The present disclosure relates to an information processing method for generating an identification algorithm that identifies types of waste material, an information processing device, and an information processing program.

### Background Art

In a waste treatment facility, various types of waste material are brought into a waste pit. The waste material is accumulated in the waste pit, and then, fed to an incinerator and subjected to incineration processing. Quality of waste material to be fed to the incinerator affects combustion. Further, the waste material in the waste pit includes waste material which causes a trouble in equipment if the waste material is fed as is. Thus, in the facility in related art, an operator performs operation of stirring and feeding waste material to the incinerator using a crane while visually identifying types of the waste material in the waste pit to stabilize combustion and prevent occurrence of a trouble in equipment.

The present applicant has already proposed a technique of performing crane operation while automatically identifying waste material using an identification algorithm (learned model) that identifies types of waste material accumulated in a waste pit (see Japanese Patent Laid-Open No. 2020-038058).

### Summary of Invention

The inventors of the present application have examined hard to find an improved technique of a waste identification method using the above-described identification algorithm. As a result, the inventors have gained the following knowledge. Note that the following knowledge is merely a trigger to achieve the present technique and does not limit the present technique.

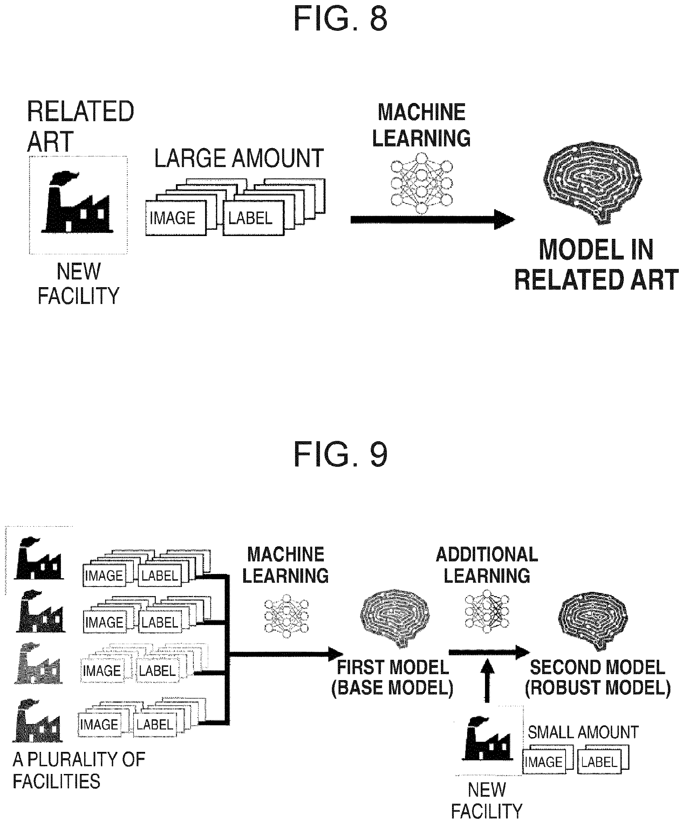

In other words, as illustrated in Figure 8, machine learning (supervised learning) requires a large amount of data that has correct answers, and thus, in the waste identification method using the algorithm in related art (model in the related art), a large amount of image data and training data needs to be newly prepared for each waste treatment facility.

However, in a case where the identification algorithm is introduced in a newly constructed facility, a period from when the facility starts accepting waste material until the facility formally starts operation is limited, and thus, it is necessary to collect image data, create training data and learn these in a short period of time.

Further, even if collection of image data, creation of training data and learning of these are performed in a short period of time, there is only a small amount of training data for a type of waste material which appears less frequently in the new facility, and thus, identification accuracy of the waste material using the identification algorithm does not increase.

Further, not only a shape and a dimension of the waste pit, but also various environmental conditions (such as, for example, a position, an angle and illumination conditions of a camera for image acquisition) are different for each of the waste treatment facilities, and thus, even if the identification algorithm created using image data and training data of a certain facility is used as is in another facility, sufficient identification accuracy cannot be obtained.

It is desired to provide an information processing method which is capable of reducing man-hours related to introduction of an identification algorithm that identifies types of waste material in a newly introduced facility and which achieves high identification accuracy, an information processing device, and an information processing program.

An information processing method according to one aspect of the present disclosure includes
a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types, and
a step of generating a second model that is an identification algorithm that supports waste material of a second facility different from the plurality of facilities by additionally learning second image data obtained by capturing an image of inside of a waste pit of the second facility and second training data in which respective pieces of waste material in the image are labeled with types, with respect to the generated first model.

An information processing device according to one aspect of the present disclosure includes
a first model generation unit that generates a first model that is an identification algorithm of types of waste material by machine learning first image data obtained by capturing images of inside of waste pits of a plurality of facilities in which waste material is accumulated and first training data in which respective pieces of the waste material in the image are labeled with types, and
a second model generation unit that generates a second model that is an identification algorithm that supports waste material of a second facility different from the plurality of facilities by additionally learning second image data obtained by capturing an image of inside of a waste pit of the second facility and second training data in which respective pieces of waste material in the image are labeled with types, with respect to the generated first model.

### Brief Description of Drawings

[Figure 1] Figure 1 is a schematic view illustrating a configuration of a waste treatment facility according to one embodiment.
[Figure 2] Figure 2 is a block diagram illustrating a configuration of an information processing device according to one embodiment.
[Figure 3] Figure 3 is a flowchart indicating an example of an information processing method by the information processing device according to one embodiment.
[Figure 4] Figure 4 is a view illustrating an example of image data obtained by capturing an image of inside of a waste pit.
[Figure 5] Figure 5 is a view illustrating an example of training data in which waste material and identification objects other than waste material are labeled with types in the image data obtained by capturing the image of inside of the waste pit.
[Figure 6] Figure 6 is a view illustrating an example of data in which an identification result by a type identification unit is displayed in a superimposed manner on the image data obtained by capturing the image of inside of the waste pit.
[Figure 7] Figure 7 is a map displaying ratios of types of waste material within the waste pit for each area.
[Figure 8] Figure 8 is a conceptual view indicating a method for generating an identification algorithm in related art.
[Figure 9] Figure 9 is a conceptual view illustrating a method for generating an identification algorithm according to one embodiment.
[Figure 10] Figure 10 is a block diagram illustrating a configuration of an information processing device according to one modification of one embodiment.

### Description of Embodiment

An information processing method according to a first aspect of an embodiment includes
a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types, and
a step of generating a second model that is an identification algorithm that supports waste material in a second facility different from the plurality of facilities by additionally learning second image data obtained by capturing an image of inside of a waste pit of the second facility and second training data in which respective pieces of waste material in the image are labeled with types, with respect to the generated first model.

According to such an aspect, it is possible to perform learning in advance using a large amount of training data collected and prepared in a plurality of facilities without a period being limited, before an identification algorithm is introduced to a newly introduced facility (second facility). Further, a type of waste material which appears less frequently in one facility can also be learned using a sufficient amount of training data. Still further, learning can be performed using a wide variety of training data while differences in a shape and a dimension of a waste pit and differences in various environmental conditions (such as, for example, a position, an angle and illumination conditions of a camera for image acquisition) for each facility are taken into account, so that an identification algorithm (first model) having robustness (property of being able to perform stable and highly accurate identification on a wide variety of data) can be obtained.

Then, a second model is generated by additionally learning training data collected and prepared in the newly introduced facility (second facility), with respect to such a first model. Here, according to the knowledge of the present inventors, an amount of the training data (training data collected and prepared in the newly introduced facility) to be used in additional learning is preferably made smaller than an amount of the training data (training data collected and prepared in the plurality of facilities) to be used in generation of the first model. If the amount of the training data to be used in additional learning is small, the model is less affected by environmental conditions (such as a position, an angle and illumination conditions of a camera for image acquisition) in the newly introduced facility and environmental change in the future (such as change of a shape and color of a garbage bag and dirt of a pit side wall over time). However, in a case where a type of waste material that does not exist in the first training data exists in the newly introduced facility, by including training data of the type of the waste material in the training data to be collected and prepared in the newly introduced facility, a second model capable of identifying the type of the waste material can be generated. With such a configuration, it is possible to obtain a model (second model) which supports the newly introduced facility and which achieves high identification accuracy while keeping robustness to some extent. Further, it is possible to reduce man-hours related to introduction of an identification algorithm that identifies types of waste material in the newly introduced facility.

An information processing method according to a second aspect of the embodiment is the information processing method according to the first aspect, in which the second image data and the second training data include a side wall of the waste pit of the second facility and/or a crane that stirs or carries waste material in the image.

According to such an aspect, additional learning can be performed while differences in a shape and a dimension of the waste pit and a shape and a dimension of a crane in the newly introduced facility (second facility) are taken into account, so that it is possible to increase identification accuracy of the side wall and/or the crane using the second model and also increase identification accuracy of types of waste material compared to a case where data only including waste material (that is, data not including the side wall and/or the crane of waste pit in the image) is used.

An information processing method according to a third aspect of the embodiment is the information processing method according to the first or the second aspect, in which
an amount of the second training data is equal to or less than 30% with respect to an amount of the first training data.

An information processing method according to a fourth aspect of the embodiment is the information processing method according to the third aspect, in which
the amount of the second training data is equal to or less than 15% with respect to the amount of the first training data.

An information processing method according to a fifth aspect of the embodiment is the information processing method according to the fourth aspect, in which
the amount of the second training data is equal to or less than 5% with respect to the amount of the first training data.

An information processing method according to a sixth aspect of the embodiment is the information processing method according to any one of the first to the fifth aspects, in which
the identification algorithm includes one or more of statistical estimation, reinforcement learning and deep learning using linear regression, Boltzmann machine, neural network, support vector machine, Bayesian network, sparse regression, decision tree or random forest.

An information processing method according to a seventh aspect of the embodiment is the information processing method according to any one of the first to the sixth aspects, in which
the second training data includes data in which labeling is performed in the whole of the captured image of inside of the waste pit of the second facility.

According to such an aspect, additional learning can be performed while information of vision (a field of view and an angle of view) of the image of inside of the waste pit obtained by an imaging device provided in the newly introduced facility (second facility) is taken into account, so that it is possible to increase identification accuracy of types of waste material using the second model.

An information processing method according to an eighth aspect of the embodiment is the information processing method according to any one of the first to the sixth aspects, in which
the second training data includes data in which part of the captured image of inside of the waste pit of the second facility is cut out and labeling is performed only in the cutout part.

According to such an aspect, it is possible to substantially reduce a data amount and man-hours related to creation of training data compared to a case where labeling is performed in the whole of the image.

An information processing method according to a ninth aspect of the embodiment is the information processing method according to any one of the first to the eighth aspects, in which
the second image data to be used in the step of generating the second model is obtained by inputting the image data obtained by capturing the image of inside of the waste pit of the second facility to the first model, identifying types of waste material and selecting and using image data with identification accuracy lower than a reference (first reference) determined in advance from the image data.

According to such an aspect, a type of waste material for which sufficient identification accuracy cannot be obtained using the first model in the second facility can be confirmed, and additional learning can be performed mainly using the image data and the training data including the type, so that it is possible to implement efficient collection of learning data and learning.

An information processing method according to a tenth aspect of the embodiment is the information processing method according to any one of the first to the tenth aspects, in which
in the step of generating the first model, information on imaging conditions and/or an imaging environment in each facility are learned together.

According to such an aspect, the identification algorithm can be operated even if imaging conditions (such as resolution, an exposure period, gain and focus of the camera) and an imaging environment (such as an amount of natural light by time and weather, and ON/OFF of illumination) change due to a trouble, or the like.

An information processing method according to an eleventh aspect of the embodiment is the information processing method according to any one of the first to the tenth aspects, in which
the first image data is obtained by correcting at least one of color tone, brightness or chroma of image data obtained by capturing an image of inside of a waste pit of each facility with reference to a captured image of a color chart for image correction common among the plurality of facilities.

According to such an aspect, differences in color tone, brightness and chroma of the images captured in the plurality of facilities under different conditions of illumination and natural light can be corrected, so that it is possible to increase identification accuracy of the identification algorithm.

An information processing method according to a twelfth aspect of the embodiment is the information processing method according to any one of the first to the tenth aspects, in which
the first image data is obtained by capturing an image of inside of a waste pit of each facility along with a color chart for image correction common among the plurality of facilities.

Also according to such an aspect, differences in color tone, brightness and chroma of the images captured in the plurality of facilities under different conditions of illumination and natural light can be corrected, so that it is possible to increase identification accuracy of the identification algorithm.

An information processing method according to a thirteenth aspect of the embodiment is the information processing method according to any one of the first to the twelfth aspects, in which
the second image data includes data obtained by synthesizing captured images of waste material within the waste pits of the plurality of facilities or waste material within waste pits of other facilities different from both the plurality of facilities and the second facility, with a rendering image of the side wall of the waste pit and/or the crane that stirs or carries the waste material created based on three-dimensional design data of the second facility.

According to such an aspect, image data regarding vision of a pit, a crane, and the like, can be created before the pit is constructed and the crane is installed in the newly introduced facility (second facility) and can be used in learning.

An information processing method according to a fourteenth aspect of the embodiment is the information processing method according to any one of the first to the thirteenth aspects, further including
a step of regularly monitoring identification accuracy during operation after operation of the generated second model is started, and in a case where the identification accuracy becomes lower than a reference (second reference) determined in advance, updating the second model by additionally learning image data of waste material at that time and training data in which respective pieces of the waste material in the image are labeled with types, with respect to the second model.

According to such an aspect, it is possible to support change of types of waste material, change of ratios of respective types of waste material, and the like.

An information processing method according to a fifteenth aspect of the embodiment is the information processing method according to any one of the first to the fourteenth aspects, further including
a step of generating a third model that is an identification algorithm that supports waste material of a third facility different from both the plurality of facilities and the second facility by additionally learning third image data obtained by capturing an image of inside of a waste pit of the third facility and third training data in which respective pieces of waste material in the image are labeled with types, with respect to the generated second model.

According to such an aspect, the model (second model) obtained by additionally learning the second training data with respect to the first training data can be further utilized as a base model for additional learning using the third training data in another facility (third facility), so that it can be expected that identification accuracy of types of waste material is sequentially improved.

An information processing device according to a sixteenth aspect of the embodiment includes
a first model generation unit that generates a first model that is an identification algorithm of types of waste material by machine learning first image data obtained by capturing images of inside of waste pits of a plurality of facilities in which waste material is accumulated and first training data in which respective pieces of the waste material in the images are labeled with types, and
a second model generation unit that generates a second model that is an identification algorithm that supports waste material of a second facility different from the plurality of facilities by additionally learning second image data obtained by capturing an image of inside of a waste pit of the second facility and second training data in which respective pieces of waste material in the image are labeled with types, with respect to the generated first model.

A computer-readable recording medium according to a seventeenth aspect of the embodiment records a fallen person detection program in a non-transitory manner, the information processing program causing a computer to execute
a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types, and
a step of generating a second model that is an identification algorithm that supports waste material in a second facility different from the plurality of facilities by additionally learning second image data obtained by capturing an image of inside of a waste pit of the second facility and second training data in which respective pieces of waste material in the image are labeled with types, with respect to the generated first model.

An information processing method according to an eighteenth aspect of the embodiment includes
a step of identifying types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.

An information processing device according to a nineteenth aspect of the embodiment includes
a type identification unit that identifies types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.

A computer-readable recording medium according to a twentieth aspect of the embodiment records a fallen person detection program in a non-transitory manner, the information processing program causing a computer to execute
a step of identifying types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.

Specific examples of an embodiment will be described below with reference to the accompanying drawings. Note that the same reference numerals will be used for portions having the same configuration in the following description and drawings to be used in the following description, and redundant description will be omitted.

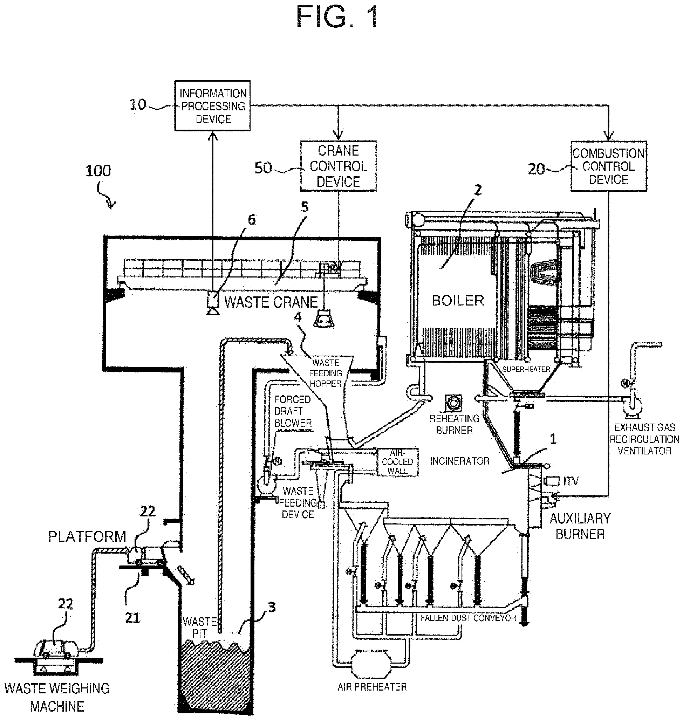

Figure 1 is a schematic view illustrating a configuration of a waste treatment facility 100 (hereinafter, also referred to as a second facility) according to one embodiment.

As illustrated in Figure 1, the waste treatment facility 100 includes a platform 21 at which a transportation vehicle (waste collection vehicle) 22 on which waste material is loaded is stopped, a waste pit 3 in which waste material dumped from the platform 21 is accumulated, a crane 5 that stirs and carries the waste material accumulated in the waste pit 3, a hopper 4 in which the waste material carried by the crane 5 is fed, an incinerator 1 that incinerates the waste material fed from the hopper 4, and an exhaust heat boiler 2 that collects exhaust heat from exhaust gas generated in the incinerator 1. A type of the incinerator 1 is not limited to a stoker incinerator as illustrated in Figure 1 and includes a fluidized incinerator (also referred to as a fluidized bed incinerator). Further, a structure of the waste pit 3 is not limited to a single-stage pit as illustrated in Figure 1 and includes a two-stage pit which is a waste pit divided into a dumping portion and an accumulation portion. Further, in the waste treatment facility 100, a crane control device 50 that controls behavior of the crane 5 and a combustion control device 20 that controls combustion of waste material in the incinerator 1 are provided.

Waste material to be carried in a state of being loaded on the transportation vehicle 22 is dumped into the waste pit 3 from the platform 21 and accumulated in the waste pit 3. The waste material accumulated in the waste pit 3 is stirred by the crane 5 and carried to the hopper 4 by the crane 5, fed inside the incinerator 1 via the hopper 4 and incinerated and processed inside the incinerator 1.

As illustrated in Figure 1, in the waste treatment facility 100, an imaging device 6 (hereinafter, also referred to as a camera) that captures an image of inside of the waste pit 3 and an information processing device 10 that identifies types of the waste material in the waste pit 3 are provided.

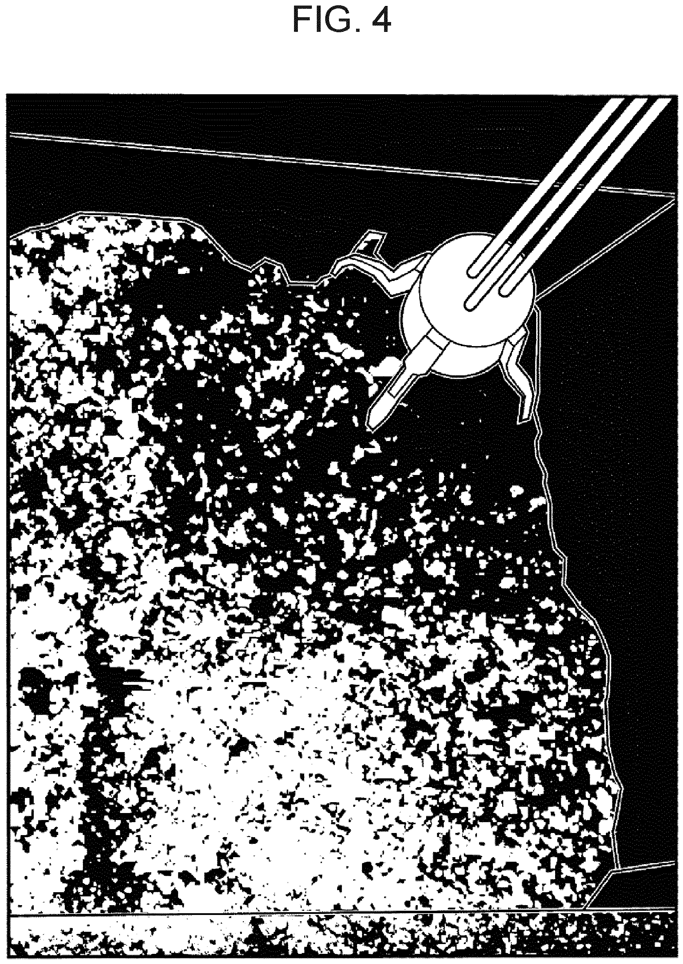

The imaging device 6 is provided above the waste pit 3 and fixed at a rail of the crane 5 in the illustrated example so as to be able to capture an image of the waste material accumulated in the waste pit 3 from above the waste pit 3. Figure 4 is a view illustrating an example of image data obtained by capturing an image of inside of the waste pit 3 by the imaging device 6.

The imaging device 6 may be an RGB camera that outputs shape and chromatic image data of the waste material as an imaging result or may be a near infrared camera that outputs near infrared image data of the waste material as an imaging result or may be a 3D camera or an RGB-D camera that captures an image of the waste material as three-dimensional image data as the imaging result or may be a combination of two or more of these.

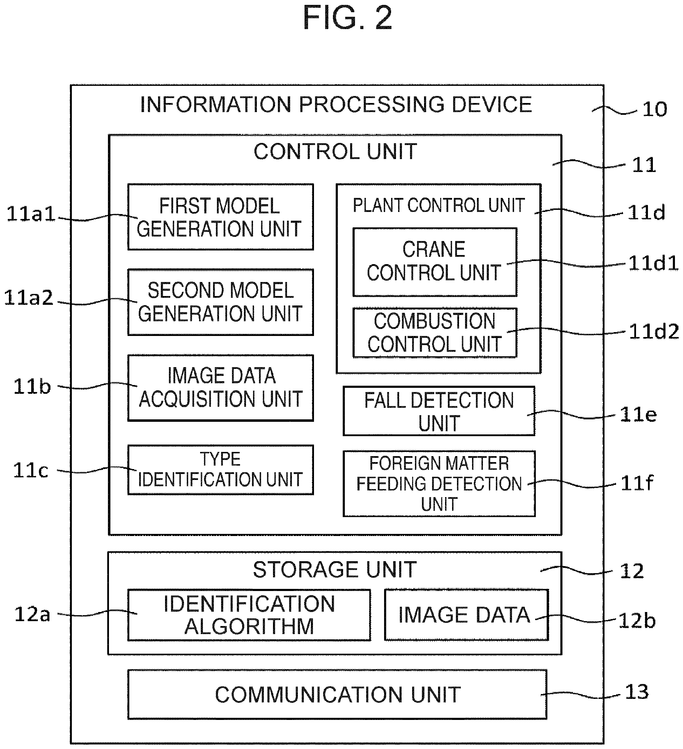

A configuration of the information processing device 10 that identifies types of the waste material accumulated in the waste pit 3 will be described next. Figure 2 is a block diagram illustrating the configuration of the information processing device 10. The information processing device 10 can be configured with one or more computers.

As illustrated in Figure 2, the information processing device 10 includes a control unit 11, a storage unit 12 and a communication unit 13. The respective units are communicably connected to each other via a bus.

Among these, the communication unit 13 is a communication interface between respective devices including the imaging device 6, the crane control device 50 and the combustion control device 20, and the information processing device 10. The communication unit 13 transmits/receives information between the respective devices including the imaging device 6, the crane control device 50 and the combustion control device 20, and the information processing device 10.

The storage unit 12 is a stationary-type data storage such as, for example, a hard disk. In the storage unit 12, various kinds of data that are to be handled by the control unit 11 are stored. Further, in the storage unit 12, an identification algorithm 12a generated by a first model generation unit 11a1 and a second model generation unit 11a2 which will be described later, and image data 12b acquired by an image data acquisition unit 11b which will be described later are stored.

The control unit 11 is control means for performing various kinds of processing of the information processing device 10. As illustrated in Figure 2, the control unit 11 includes the first model generation unit 11a1, the second model generation unit 11a2, the image data acquisition unit 11b, a type identification unit 11c, a plant control unit 11d, a fall detection unit 11e, and a foreign matter feeding detection unit 11f. These units may be implemented by a processor within the information processing device 10 executing a predetermined program or may be implemented by hardware.

The first model generation unit 11a1 generates the identification algorithm 12a (first model) of types of waste material by machine learning first image data obtained by capturing images of inside of waste pits of a plurality of facilities (waste treatment facilities different from the second facility 100) in which waste material is accumulated, and first training data in which respective pieces of the waste material in the images are labeled with types.

The first model generation unit 11a1 may generate the identification algorithm 12a (first model) that identifies types of identification objects other than waste material in addition to the types of the waste material accumulated in the waste pit by machine learning the first image data obtained by capturing the images of inside of the waste pits of the plurality of facilities and first training data in which the respective pieces of the waste material in the images are labeled with types and the identification objects other than the waste material in the images are labeled by type.

The identification algorithm 12a may specifically include, for example, one or more of statistical estimation, reinforcement learning and deep learning using linear regression, Boltzmann machine, neural network, support vector machine, Bayesian network, sparse regression, decision tree or random forest.

The first training data may be created by, for example, a skilled operator who performs operation in each facility visually identifying waste material and identification objects other than the waste material and labeling respective pieces of the waste material and the identification objects by type on the first image data obtained by capturing an image of inside of the waste pit. The respective pieces of waste material and the identification objects other than the waste material may be labeled with types, for example, in a state where the types are superimposed on the first image data as a layer by type.

The types of the waste material with which labeling is performed in the first training data may include one or two among unbroken waste bags, paper waste, pruned branches, futons, sludge, shredded oversized waste, cardboards, hemp bags, paper bags, bottom waste (waste material existing in the vicinity of a bottom of the waste pit 3, compressed by the waste material above and including a high moisture content). Further, the types of the waste material with which labeling is performed in the first training data may include unexpected waste material (abnormal matter) which is not expected to be dumped into the waste pit but is likely to be dumped. Here, examples of the abnormal matter can include matters that should not be incinerated, specifically, for example, fluorescent lamps, mercury-mixed waste and explosives such as cylinders, cans and oil tanks. Further, the types of waste material with which labeling is performed in the first training data may include one or more among wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene foams, meat and bone meal, agricultural products, pottery, glass scrap, metal scrap, debris, concrete scrap, tatami mat, bamboo, straw, and activated carbon.

The types of the identification objects other than the waste material with which labeling is performed in the first training data may include one or more among beams of each facility, a side wall of the waste pit, a cliff of the mountain of the waste material accumulated in the waste pit (portion which is the cliff of the mountain of the waste material and is too dark to visually identify the types of the waste material), and a crane that stirs or carries the waste material. Further, the types of the identification objects other than the waste material with which labeling is performed in the first training data may include one or both of a worker and a transportation vehicle. Still further, the types of the identification objects other than the waste material with which labeling is performed in the training data may include one or two among walls, pillars, floor, windows, ceilings, doors, stairs, and girders (a structure that moves with suspending the crane), corridors, waste pit dividers, waste feeding hoppers, and loading doors of each facility, workers, and carry-in vehicles.

The first model generation unit 11a1 may learn information on imaging conditions (such as resolution, an exposure period, gain and focus of the camera) and/or an imaging environment (such as an amount of natural light by time and weather and ON/OFF of illumination) in each facility together when generating the first model by machine learning the first image data and the first training data. This makes it possible to operate the identification algorithm even if the imaging conditions and the imaging environment change due to a trouble, or the like.

The first image data may be obtained by correcting at least one of color tone, brightness or chroma of uncorrected image data obtained by capturing an image of inside of each facility with reference to a captured image of a color chart for image correction common among the plurality of facilities or may be obtained by capturing an image of inside of a waste pit of each facility along with the color chart for image correction common among the plurality of facilities. This makes it possible to correct differences in color tone, brightness and chroma of the images captured in the plurality of facilities under different conditions of illumination and natural light when the first model generation unit 11a1 generates the first model by machine learning the first image data and the first training data, so that it is possible to increase identification accuracy of the identification algorithm 12a.

The second model generation unit 11a2 generates the identification algorithm 12a (second model) that supports waste material of the second facility by additionally learning second image data obtained by capturing an image of inside of a waste pit of the second facility 100 and second training data in which respective pieces of waste material in the image are labeled with types, with respect to the identification algorithm 12a (first model) generated by the first model generation unit 11a1.

The second model generation unit 11a2 may generate the identification algorithm 12a (second model) that identifies types of identification objects other than waste material in addition to types of the waste material accumulated in the waste pit of the second facility 100 by additionally learning second image data obtained by capturing an image of inside of the waste pit of the second facility 100 and second training data in which respective pieces of waste material in the image are labeled with types and the identification objects other than the waste material in the image are labeled by type, with respect to the identification algorithm 12a (first model) generated by the first model generation unit 11a1.

According to the knowledge of the present inventors, an amount of the training data (data amount of the second training data) to be used in creation of the second model may be small and is preferably equal to or less than 300, more preferably equal to or less than 150, and further more preferably equal to or less than 5% with respect to an amount of training data (data amount of the first training data) necessary for creating the first model. If the amount of the training data of the second facility 100 is small, the model is less affected by environmental conditions (such as a position, an angle and illumination conditions of a camera for image acquisition) in the newly introduced facility and environmental change in the future (such as change of a shape and color of a garbage bag and dirt of a pit side wall over time). However, in a case where a type of waste material not existing upon generation of the first model exists in the newly introduced facility, by including training data of the type of the waste material in the training data collected and prepared in the newly introduced facility, the second model capable of identifying the type of the waste material can be generated. With such a configuration, it is possible to obtain the identification algorithm 12a (second model) which supports the newly introduced facility and which achieves high identification accuracy while keeping robustness to some extent and reduce man-hours required for generation of the identification algorithm 12a.

The second training data may be created by, for example, a skilled operator who performs operation in the second facility 100 visually identifying waste material and identification objects other than the waste material and performing labeling by type in the second image data obtained by capturing the image of inside of the waste pit 3. The respective pieces of the waste material and the identification objects other than the waste material may be labeled with types, for example, in a state where the types are superimposed on the second image data as a layer by type.

The types of the waste material with which labeling is performed in the second training data may include one or more among unbroken waste bags, paper waste, pruned branches, futons, sludge, shredded oversized waste, cardboards, hemp bags, paper bags, bottom waste (waste material existing in the vicinity of a bottom of the waste pit 3, compressed by the waste material above and including a high moisture content). Further, the types of the waste material with which labeling is performed in the second training data may include unexpected waste material (abnormal matter) which is not expected to be dumped into the waste pit 3 but is likely to be dumped. Here, examples of the abnormal matter can include matters that should not be incinerated, specifically, for example, fluorescent lamps, mercury-mixed waste and explosives such as cylinders, cans and oil tanks. Further, the types of waste material with which labeling is performed in the second training data may include one or more among wood waste, textile waste, clothing waste, plastic waste, animal residue, animal corpse, kitchen waste, vegetation, soil, medical waste, incineration ash, bicycles, chests, beds, shelves, desks, chairs, agricultural vinyl, PET bottles, styrene foams, meat and bone meal, agricultural products, pottery, glass scrap, metal scrap, debris, concrete scrap, tatami mat, bamboo, straw, and activated carbon. Note that the types of the waste material with which labeling is performed in the second training data do not have to be the same as the types of the waste material with which labeling is performed in the first training data, and as described above, in a case where a type of waste material not existing in the first training data exists in the newly introduced facility, by including the type of the waste material as a type of waste material with which labeling is to be performed in the second training data, the second model capable of identifying the type of the waste material can be generated. Further, in a case where the types of waste material existing in the first training data include a type of material not existing in the newly introduced facility, the type of the waste material does not have to be included as a type of waste material with which labeling is to be performed in the second training data.

The types of the identification objects other than the waste material with which labeling is performed in the second training data may include one or more among beams of the second facility 100, a side wall of the waste pit 3, a cliff of the mountain of the waste material accumulated in the waste pit 3 (portion which is the cliff of the mountain of the waste material and is too dark to visually identify the types of the waste material), and a crane 5 that stirs or carries the waste material. Further, the types of the identification objects other than the waste material with which labeling is performed in the second training data may include one or both of a worker and a transportation vehicle. Still further, the types of the identification objects other than the waste material with which labeling is performed in the training data may include one or two among walls, pillars, floor, windows, ceilings, doors, stairs, and girders (a structure that moves with suspending the crane 5), corridors, dividers of the waste pit 3, waste feeding hoppers, and loading doors of the second facility 100, workers and carry-in vehicles. Note that the types of the identification objects other than the waste material with which labeling is performed in the second training data do not have to be the same as the types of the identification objects other than the waste material with which labeling is performed in the first training data, and in a case where a type of an identification object other than the waste material not existing in the first training data exists in the newly introduced facility, by including the type of the identification object as a type of the identification object other than the waste material with which labeling is performed in the second training data, the second model capable of identifying the type of the identification object can be generated. Further, in a case where the types of the identification objects other than the waste material existing in the first training data include a type of an identification object not existing in the newly introduced facility, the type of the identification object does not have to be included as a type of the identification object other than the waste material with which labeling is to be performed in the second training data.

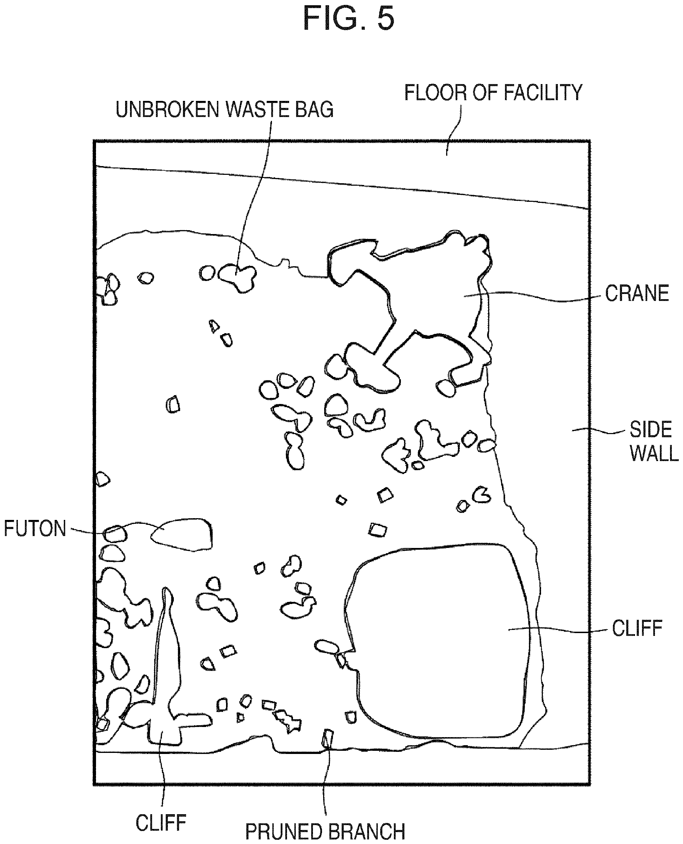

Figure 5 is a view illustrating the second training data in which respective pieces of the waste material and the identification objects other than the waste material are labeled with types in the image data obtained by capturing the image of inside of the waste pit 3 of the second facility 100. In the example illustrated in Figure 5, unbroken waste bags, pruned branches, and futons are each labeled by type as waste material, and the crane 5, cliffs of the mountain of waste material, side walls of the waste pit 3 and a floor of the second facility 100 are each labeled by type as identification objects other than waste material in the image data obtained by capturing the image of inside of the waste pit 3.

The second training data may include data in which labeling is performed in the whole of the captured image of inside of the waste pit 3 of the second facility 100 or may include data in which part of the captured image of inside of the waste pit 3 of the second facility 100 is cut out and labeling is performed only in the cutout part. By including training data in which labeling is performed in the whole of the image, additional learning can be performed while information on vision (a field of view and an angle of view) of the image of inside of the waste pit obtained by an imaging device provided in the newly introduced facility (second facility) is taken into account, so that it is possible to increase identification accuracy of types of waste material using the second model. Further, by including training data in which labeling is partially performed, compared to a case where labeling is performed in the whole of the image, it is possible to substantially reduce a data amount and man-hours for creation of the training data. Still further, the second image data and the second training data may include the side wall of the waste pit 3 of the second facility 100 and/or the crane 5 in the image. As a result of the second training data including the side wall of the waste pit of the second facility 100 and/or the crane that stirs or carries the waste material in the image, additional learning can be performed while differences in a shape and a dimension of the waste pit in the newly introduced facility (second facility) and a shape and a dimension of the crane are taken into account, which increases identification accuracy of the side wall and/or the crane using the second model, so that it is possible to increase identification accuracy of waste material compared to a case where data of only the waste material (that is, data not including the side wall and/or the crane in the image) is used.

The second image data may be obtained by inputting the image data obtained by capturing the image of inside of the waste pit 3 of the second facility 100 to the first model, identifying waste material and selecting and using image data with identification accuracy lower than a reference determined in advance from the image data or may be image data other than this (that is, the image data itself obtained by capturing the image of inside of the waste pit 3 of the second facility 100). In a case where the second image data is obtained by inputting the image data obtained by capturing the image of inside of the waste pit 3 of the second facility 100 to the first model, identifying waste material and selecting and using image data with low identification accuracy from the image data, a type of waste material for which sufficient identification accuracy cannot be obtained using the first model can be confirmed in the second facility 100, and additional learning can be performed mainly using the image data and the training data including the type of the waste material, so that it is possible to implement efficient collection of learning data and learning.

The second image data may include data obtained by synthesizing captured images of waste material within the waste pits of the plurality of facilities or waste material within waste pits of other facilities different from the plurality of facilities and the second facility, with a rendering image of the side wall of the waste pit 3 and/or the crane 5 created based on three-dimensional design data of the second facility 100. In this case, image data regarding vision of the pit 3, the crane 5, and the like, can be created before the pit is constructed and the crane is installed in the newly introduced facility (second facility 100) and can be used in learning.

The image data acquisition unit 11b acquires new image data obtained by capturing an image of inside of the waste pit 3 of the second facility 100 from the imaging device 6. The new image data acquired by the image data acquisition unit 11b is stored in the storage unit 12.

The type identification unit 11c identifies types of waste material accumulated in the waste pit 3 of the second facility 100 by utilizing the identification algorithm 12a (second model) generated by the second model generation unit 11a2 using the new image data acquired by the image data acquisition unit 11b as an input.

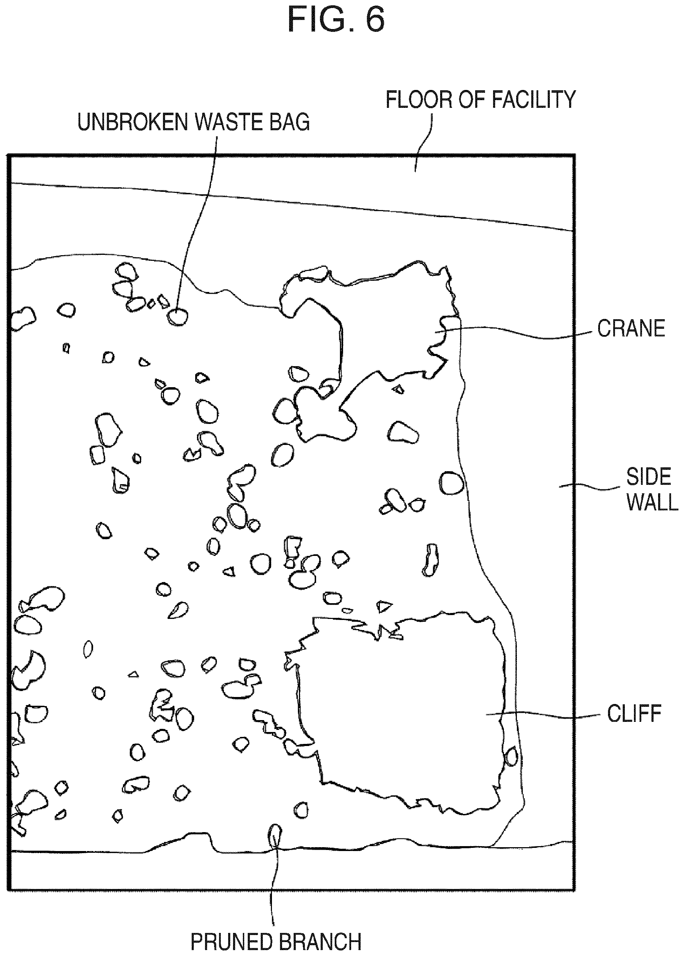

The type identification unit 11c may identify types of identification objects other than waste material along with the types of the waste material accumulated in the waste pit 3 of the second facility 100 by utilizing the identification algorithm 12a (second model) using the new image data acquired by the image data acquisition unit 11b as an input. Figure 6 is a view illustrating an example of data in which an identification result by the type identification unit 11c is displayed in a superimposed manner on the image data obtained by capturing the image of inside of the waste pit 3 of the second facility 100. In the example illustrated in Figure 6, the waste material (unbroken waste bags and pruned branches) and the identification objects (the crane 5, the cliffs of the mountain of the waste material, the side walls of the waste pit 3 and the floor of the second facility 100) other than the waste material identified by the type identification unit 11c are displayed by type in a superimposed manner on the image data.

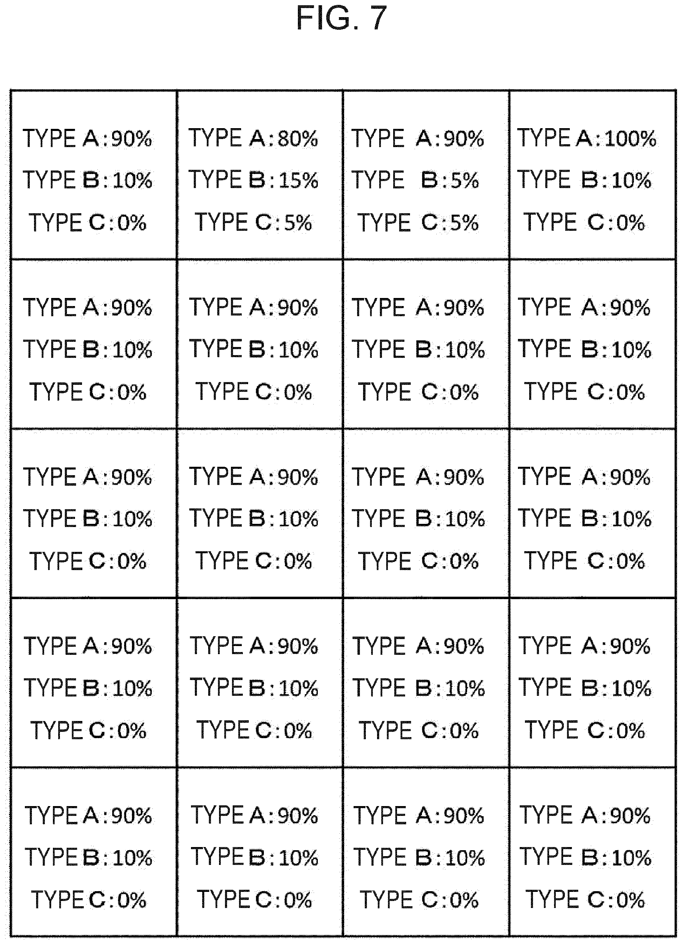

As illustrated in Figure 7, the type identification unit 11c may generate a map displaying ratios of the types of the waste material accumulated in the waste pit 3 of the second facility 100 for each area based on the identification result. In the example illustrated in Figure 7, inside of the waste pit 3 is divided in a grid of 5 × 4, and the ratios of the types of the waste material identified by the type identification unit 11c are displayed for each area.

The plant control unit 11d controls the waste treatment facility (second facility) 100 based on the identification result of the type identification unit 11c.

In the example illustrated in Figure 1, the plant control unit 11d includes a crane control unit 11d1 that transmits the identification result of the type identification unit 11c (that is, information on the types of the waste material identified from the image data) to the crane control device 50 that controls the crane 5 that stirs or carries the waste material, and a combustion control unit 11d2 that transmits the identification result of the type identification unit 11c (that is, information on the types of the waste material identified from the image data) to the combustion control device 20 that controls combustion of the waste material.

Note that while in the example illustrated in Figure 1, the plant control unit 11d includes both the crane control unit 11d1 and the combustion control unit 11d2, the present disclosure is not limited to this, and the plant control unit 11d may include only one of the crane control unit 11d1 or the combustion control unit 11d2.

The crane control unit 11d1, for example, transmits a map (see Figure 7) displaying the ratios of the types of the waste material accumulated in the waste pit 3 for each area to the crane control device 50 as the identification result of the type identification unit 11c. The crane control device 50 causes the crane 5 to operate to stir the waste material in the waste pit 3 based on the map received from the crane control unit 11d1 so that the ratios of the types of the waste material become equal in all the areas.

The combustion control unit 11d2, for example, transmits the map (see Figure 7) displaying the ratios of the types of the waste material accumulated in the waste pit 3 for each area to the combustion control device 20 as the identification result of the type identification unit 11c. The combustion control device 20 grasps the ratios of the types of the waste material to be gripped by the crane 5 and carried together from the waste pit 3 to the hopper 4 based on the map received from the combustion control unit 11d2 and controls combustion of the waste material in accordance with the ratios of the waste material fed together into the incinerator 1 via the hopper 4 (for example, controls feeding speed of the stoker and an amount of air to be supplied).

The fall detection unit 11e detects fall of a worker or a transportation vehicle into the waste pit 3 from the platform 21 based on the identification result of the type identification unit 11c (that is, information on the worker or the transportation vehicle identified from the image data). The fall detection unit 11e may transmit the identification result of the type identification unit 11c (that is, information on the worker or the transportation vehicle identified from the image data) to a fall detection device (not illustrated) that detects that the worker or the transportation vehicle exists in the waste pit 3 in which the waste material is accumulated. The fall detection device (not illustrated) issues an alarm or causes the crane 5 or equipment for rescue (such as, for example, a gondola) which is not illustrated to operate to rescue the worker based on the identification result of the type identification unit 11c transmitted from the fall detection unit 11e.

The foreign matter feeding detection unit 11f detects an abnormal matter dumped into the waste pit 3 based on the identification result of the type identification unit 11c (that is, information on the types of the waste material identified from the image data). Here, the "abnormal matter" refers to unexpected waste material which is not expected to be dumped into the waste pit 3 but is likely to be dumped and includes, for example, matters that should not be incinerated, specifically, for example, fluorescent lamps, mercury-mixed waste and explosives such as cylinders, cans and oil tanks. The foreign matter feeding detection unit 11f may transmit the identification result of the type identification unit (that is, information on the types of the waste material identified from the image data) to a foreign matter detection device (not illustrated) that detects an abnormal matter dumped into the waste pit 3 in which the waste material is accumulated. The foreign matter detection device (not illustrated) specifies a company or a vehicle that has dumped the foreign matter into the waste pit 3 based on the identification result of the type identification unit 11c transmitted from the foreign matter feeding detection unit 11f with reference to a database in which companies or vehicles that have dumped the waste material into the waste pit 3 are stored along with time information.

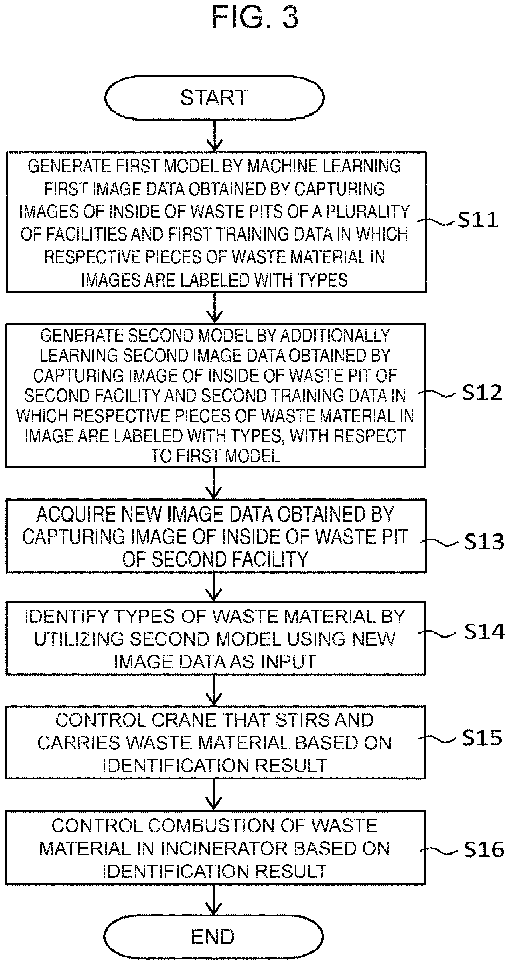

An example of an information processing method by the information processing device 10 having such a configuration will be described next. Figure 3 is a flowchart indicating an example of the information processing method.

As indicated in Figure 3, first, the first model generation unit 11a1 generates the identification algorithm 12a (first model) of the types of the waste material by machine learning first image data obtained by capturing images of inside of waste pits of a plurality of facilities (waste treatment facilities different from the second facility 100) in which waste material is accumulated and first training data in which respective pieces of the waste material in the images are labelled with types (step S11).

The first model generation unit 11a can perform learning in advance using a large amount of training data collected and prepared in the plurality of facilities without a period being limited before introduction to the second facility 100. Further, learning can be performed also for a type of waste material which appears less frequently in one facility, using a sufficient amount of training data. Still further, learning can be performed using a wide variety of training data in which differences in a shape and a dimension of a waste pit for each facility and differences in environmental conditions (such as, for example, a position, an angle and illumination conditions of a camera for image acquisition) are taken into account, so that the identification algorithm 12a (first model) having robustness can be obtained.

Then, the second model generation unit 11a2 generates the identification algorithm 12a (second model) that supports waste material of the second facility by additionally learning second image data obtained by capturing an image of inside of the waste pit of the second facility 100 and second training data in which respective pieces of waste material in the image are labeled with types, with respect to the identification algorithm 12a (first model) generated by the first model generation unit 11a1 (step S12).

Here, an amount of the training data (second training data) to be used in additional learning is preferably made smaller than an amount of the training data (first training data) to be used upon generation of the first model. If the amount of the training data to be used in additional learning is small, the model is less affected by environmental conditions (such as a position, an angle and illumination conditions of a camera for image acquisition) in the newly introduced facility and environmental change in the future (such as change of a shape and color of a garbage bag and dirt of a pit side wall over time).

However, in a case where a type of waste material not existing in the first training data exists in the second facility 100, training data of the type of the waste material is preferably included in the second training data to generate the identification algorithm 12a (second model) capable of identifying the type of the waste material.

With such a configuration, it is possible to obtain the second model which supports the second facility 100 and which achieves high identification accuracy while keeping robustness to some extent. Further, it is possible to reduce man-hours related to introduction of the identification algorithm that identifies types of waste material in the second facility 100 (newly introduced facility).

Then, the image data acquisition unit 11b acquires new image data 12b (for example, see Figure 4) obtained by capturing an image of inside of the waste pit 3 of the second facility 100 from the imaging device 6 (step S13). The new image data 12b acquired from the image data acquisition unit 11b is stored in the storage unit 12.

Then, the type identification unit 11c identifies types of the waste material accumulated in the waste pit 3 of the second facility 100 by utilizing the identification algorithm 12a (second model) generated by the second model generation unit 11a2 using the new image data acquired by the image data acquisition unit 11b as an input (step S14).

The type identification unit 11c may identify types of identification objects other than the waste material along with the types of the waste material accumulated in the waste pit 3 of the second facility 100 by utilizing the identification algorithm 12a (second model) generated by the second model generation unit 11a2 using the new image data (see, for example, Figure 4) acquired by the image data acquisition unit 11b as an input (see, for example, Figure 6). Further, the type identification unit 11c may generate a map (see, for example, Figure 7) displaying ratios of the types of the waste material accumulated in the waste pit 3 for each area based on the identification result of the types of the waste material.

Then, the plant control unit 11d controls the waste treatment plant based on the identification result of the type identification unit 11c.

Specifically, for example, the crane control unit 11d1 transmits the map displaying the ratios of the types of the waste material for each area as illustrated in Figure 7 to the crane control device 50 that controls the crane 5 that stirs or carries the waste material as the identification result of the type identification unit 11c (step S15). The crane control device 50 causes the crane 5 to operate to stir the waste material in the waste pit 3 so that the ratios of the types of the waste material become equal in all the areas based on the map received from the crane control unit 11d1.

Further, the combustion control unit 11d2 transmits the map displaying the ratios of the types of the waste material for each area as illustrated in Figure 7 to the combustion control device 20 that controls combustion of the waste material as the identification result of the type identification unit 11c (step S16). The combustion control device 20 grasps the ratios of the types of the waste material gripped by the crane 5 and carried together from the waste pit 3 to the hopper 4 based on the map received from the combustion control unit 11d2 and controls combustion of the waste material in accordance with the ratios of the respective pieces of the waste material fed together into the incinerator 1 via the hopper 4 (for example, controls feeding speed of the stoker and an amount of air to be supplied).

Note that in a case where the type identification unit 11c identifies a worker or a transportation vehicle from the image data of inside of the waste pit 3, the fall detection unit 11e may detect fall of the worker or the transportation vehicle into the waste pit 3 from the platform 21 based on the identification result of the type identification unit 11c and may transmit the identification result of the type identification unit 11c to the fall detection device (not illustrated).

Further, in a case where the type identification unit 11c detects an abnormal mater from the image data of inside of the waste pit 3, the foreign matter feeding detection unit 11f may detect the abnormal matter dumped into the waste pit 3 based on the identification result of the type identification unit 11c and may transmit the identification result of the type identification unit 11c to the foreign matter detection device (not illustrated).

By the way, as illustrated in Figure 8, machine learning (supervised learning) requires a large amount of data that has correct answers, and thus, in the waste identification method using the identification algorithm in the related art (model in the related art), a large amount of image data and training data needs to be newly prepared for each waste treatment facility.

However, in a case where the identification algorithm is introduced into a newly constructed facility, a period from when the facility starts accepting waste material until when the facility formally starts operation is limited, and thus, it is necessary to collect image data, create training data and learn these in a short period of time.

Further, even if collection of image data, creation of training data and learning of these are performed in a short period of time, there is only a small amount of training data for a type of waste material which appears less frequently in the new facility, and thus, identification accuracy of the waste material using the identification algorithm does not increase.

Further, not only a shape and a dimension of the waste pit, but also various environmental conditions (such as, for example, a position, an angle and illumination conditions of a camera for image acquisition) are different for each of the waste treatment facilities, and thus, even if the identification algorithm created using the image data and the training data of a certain facility is used as is in another facility, sufficient identification accuracy cannot be obtained.

In contrast, according to the present embodiment, as illustrated in Figure 9, learning can be performed in advance using a large amount of training data collected and prepared in a plurality of facilities without a period being limited before the identification algorithm is introduced into a new facility, and a type of waste material which appears less frequently in one facility can be also learned using a sufficient amount of training data. Further, learning can be performed using a wide variety of training data in which differences in a shape and a dimension of a waste pit for each facility and differences in various environmental conditions (such as, for example, a position, an angle and illumination conditions of a camera for image acquisition) are taken into account, so that the identification algorithm 12a (first model) having robustness can be obtained. Then, the identification algorithm 12a (second model) which supports waste material in a newly introduced facility is generated by additionally learning the training data collected and prepared in the newly introduced facility, with respect to such a first model. Here, according to the knowledge of the present inventors, an amount of the training data to be used in additional learning (training data collected and prepared in the newly introduced facility) is preferably made smaller than an amount of the training data to be used upon generation of the first model (training data collected and prepared in the plurality of facilities). If the amount of the training data to be used in additional learning is small, the model is less affected by environmental conditions (such as a position, an angle and illumination conditions of a camera for image acquisition) in the newly introduced facility and environmental change in the future (such as change of a shape and color of a garbage bag and dirt of a pit side wall over time). However, in a case where a type of waste material that does not exist in the first training data exists in the newly introduced facility, by including training data of the type of the waste material in the training data to be collected and prepared in the newly introduced facility, a second model capable of identifying the type of the waste material can be generated. By this means, it is possible to obtain a model (second model) which supports the newly introduced facility and which achieves high identification accuracy while keeping robustness to some extent. Further, compared to the waste identification method using the identification algorithm in the related art (model in the related art) as illustrated in Figure 8, it is possible to reduce man-hours related to introduction of the identification algorithm 12a that identifies types of waste material in the newly introduced facility.

Note that various changes can be made to the above-described embodiment. Modifications of the above-described embodiment will be described below.

While in the above-described embodiment, as illustrated in Figure 2, the control unit 11 includes the first model generation unit 11a1, the second model generation unit 11a2, the image data acquisition unit 11b, the type identification unit 11c, the plant control unit 11d, the fall detection unit 11e and the foreign matter feeding detection unit 11f, the present disclosure is not limited to this, and part of the processing of the control unit 11 may be performed in an information processing device different from the information processing device 10 or on a cloud server instead of being performed in the information processing device 10. Further, part of the storage unit 12 may be in an information processing device different from the information processing device 10 or on a cloud server instead of being in the information processing device 10.

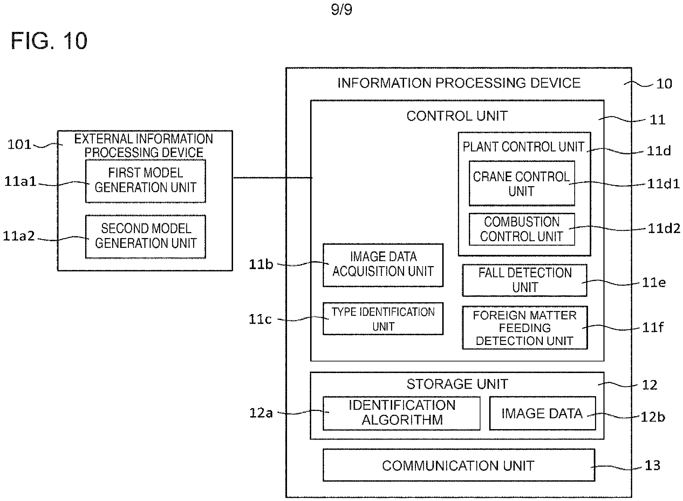

For example, as illustrated in Figure 10, the identification algorithm 12a (the first model and the second model) may be generated by processing of the first model generation unit 11a1 and the second model generation unit 11a2 being executed on an external information processing device 101 (cloud server). Further, the processing of the type identification unit 11c may be executed on the external information processing device 101 (cloud server) by utilizing the identification algorithm 12a generated on the external information processing device 101 (cloud server), or as illustrated in Figure 10, the identification algorithm 12a (second model) generated by the external information processing device 101 (cloud server) may be downloaded from the external information processing device 101 (cloud server) by the information processing device 10 to be introduced into the second facility 100, and the processing of the type identification unit 11c may be executed in the information processing device 10 using the downloaded identification algorithm 12a. In this case, further learning can be separately performed in the external information processing device 101 while the second model is operated in the second facility 100. Further, memory capacity of the information processing device 10 can be reduced.

The control unit 11 may regularly monitor identification accuracy (that is, the identification result of the type identification unit 11c) during operation after operation of the identification algorithm (second model) generated by the second model generation unit 11a2 is started and may determine whether or not it is necessary to revise and update the identification algorithm 12a (second model). For example, the control unit 11 determines whether the identification result of the type identification unit 11c is normal or abnormal using an edge server, and in a case where an abnormality is detected, determines whether the image data and the identification result have a problem in operation of the incinerator 1. In a case where it is determined that the image data and the identification result have a problem in operation, a skilled operator may label respective pieces of waste material with types again for the image data in which the abnormality has been detected and may newly prepare training data, and the second model generation unit 11a2 may update the identification algorithm 12a (second model) by additionally learning the image data in which the abnormality has been detected and the newly prepared training data. This makes it possible to support change in types of waste material in the second facility 100, change in ratios of the respective types of the waste material, and the like.

The control unit 11 may generate an identification algorithm (third model) that supports waste material in a third facility different from both the plurality of facilities utilized upon generation of the first model and the second facility utilized upon generation of the second facility by additionally learning third image data obtained by capturing an image of inside of a waste pit of the third facility and third training data in which respective pieces of waste material in the image are labeled with types using the identification algorithm (second model) generated by the second model generation unit 11a2 as a base model. By this means, the second model can be utilized as a base model for additional learning using the third training data in another facility (third facility), so that it can be expected that identification accuracy of types of waste material is sequentially improved.

While in the above-described embodiment, the combustion control unit 11d2 transmits the map (see Figure 7) displaying the ratios of the waste material accumulated in the waste pit 3 for each area to the combustion control device 20 as the identification result of the type identification unit 11c, the present disclosure is not limited to this, and the combustion control unit 11d2 may transmit a map displaying labels obtained by converting the ratios of the types of the waste material into quality information, for example, feeding OK, feeding NG, calory L (low), M (middle), H (high), and the like, for each area to the combustion control device 20 as the identification result of the type identification unit 11c. Further, the combustion control unit 11d2 may transmit labels indicating that a ratio of influence on a combustion state is great (for example, labels like "unbroken waste bag is existing", "bottom waste is existing", and the like) to the combustion control device 20 as the identification result of the type identification unit 11c. In a similar manner, the crane control unit 11d1 may transmit labels indicating that a ratio of influence on each piece of equipment is great (for example, labels like "pruned branches are existing", "shredded oversized waste is existing", and the like) to the crane control device 50 as the identification result of the type identification unit 11c.

When the type identification unit 11c generates the map displaying the ratios of the types of the waste material accumulated in the waste pit 3 for each area based on the identification result, the ratios of the types of the waste material may be displayed while the image data acquired by the image data acquisition unit 11b is simply divided into areas, or the ratios of the types of the waste material may be displayed while the image data is associated with block numbers of the waste pit 3.

As a method for associating the image data with the crane block numbers, the crane 5 capable of measuring positions relative to the waste pit 3 is marked in advance, and a number of images are captured by the imaging device 6 so that the images include the marked crane 5, thereby the type identification unit 11c estimates a relative position and a direction of the imaging device 6 with respect to the waste pit 3 based on a number of images including the marked crane 5 and estimates a block number of a pixel on the image data from the estimated position and the imaging direction of the imaging device 6. Alternatively, a number of images are captured by the imaging device 6 so that the images include the crane 5 capable of measuring positions relative to the waste pit 3, and the type identification unit 11c marks the crane 5 in the images, thereby estimates a relative position and a direction of the imaging device 6 with respect to the waste pit 3 based on a number of images including the marked crane 5 and estimates a block number of a pixel on the image data from the estimated position and the imaging direction of the imaging device 6.

When a request for feeding is received from the incinerator 1, the crane control device 50 may select waste material that satisfies a feeding criterion using ratio thresholds by type of waste material in the waste pit 3 based on the map received from the crane control unit 11d1 and may cause the crane 5 to feed the selected waste material into the hopper 4.

Further, the crane control device 50 may select waste material so that a difference between the ratio by type of the waste material previously fed into the hopper 4 and the ratio by type of the waste material to be fed this time becomes small when selecting waste material that satisfies the feeding criterion from the waste pit 3.

The crane control device 50 may use ratio thresholds of one or more among unbroken waste bags, paper waste, pruned branches, futons, sludge, shredded oversized waste, cardboards, hemp bags, paper bags, bottom waste, wood waste, textile waste, clothing waste, plastic waste, animal residue, an animal corpse, kitchen waste, vegetation, soil, medical waste, incineration ash, agricultural vinyl, PET bottles, styrene foams, meat and bone meal, agricultural products, pottery, glass scrap, metal scrap, debris, concrete scrap, tatami mat, bamboo, straw, and activated carbon as the ratio thresholds of the above-described feeding criterion.

Further, as a way to determine the above-described feeding criterion, the crane control device 50 may determine the ratio thresholds by type of waste material with which a skilled operator determines whether or not the waste material can be fed by comparing types of waste material for which labeling is performed as to whether or not the waste material can be fed by the skilled operator visually confirming quality of waste material indicated in image data obtained by capturing an image of inside of the waste pit 3 in the past in terms of combustion stability and influence on equipment and types of waste material for which ratios by type of waste material are estimated using the type identification unit 11c for the image.

Further, the crane control device 50 may determine the ratio thresholds by type of waste material by associating ratio data by type of waste material of the waste actually fed into the hopper 4 with process data of the incinerator 1 from the map displaying the ratios of the types of the waste material accumulated in the waste pit 3 for each area received from the crane control unit 11d1 or may dynamically change the ratio thresholds by associating both data over time.

Further, the crane control device 50 may dynamically change the ratio thresholds based on weather information as well as the above-described process data. For example, the crane control device 50 changes the feeding criterion using the ratio thresholds so that the ratio threshold for unbroken waste bags is decreased or the ratio threshold for shredded oversized waste is increased if it is rainy from the weather information.

Further, the crane control device 50 may dynamically change the ratio thresholds based on day information. For example, the crane control device 50 changes the feeding criterion using the ratio thresholds so that the ratio threshold for unbroken waste bags is increased on Sunday from the day information to reduce an amount of waste incineration because there is less waste material in the waste pit 3 on Sunday.

Further, the crane control device 50 may dynamically change the ratio thresholds based on an incinerator operation planned value of the waste treatment facility 100. For example, the crane control device 50 changes the feeding criterion using the ratio thresholds so that the ratio threshold for unbroken waste bags is decreased or the ratio threshold for shredded oversized waste is increased if an evaporation amount falls below a current evaporation amount set value.

The crane control device 50 may cause the crane 5 to operate to feed waste material close to the feeding criterion into the hopper 4 or stir waste material close to the feeding criterion to create waste material that reaches the feeding criterion in a case where waste material that satisfies the feeding criterion by the ratio thresholds by type of waste material does not exist in the map received from the crane control unit 11d1 when a request for feeding is received from the incinerator 1.

The crane control device 50 may cause the crane 5 to operate to pile up only waste material that satisfies the feeding criterion by the ratio threshold by type of waste material in the map received from the crane control unit 11d1 at a specific portion of the waste pit 3. By this means, only waste material that satisfies the feeding criterion can be accumulated in the waste pit 3.

The crane control device 50 may detect waste material (for example, sludge) that affects a combustion state or waste material (for example, pruned branches) that causes a trouble of each piece of equipment existing in the waste pit 3 from the ratio thresholds by type of waste material in the map received from the crane control unit 11d1 and may cause the crane 5 to operate to accumulate the waste material at a specific portion of the waste pit 3 or may scatter the waste material at a specific location.

In a case where waste material that does not satisfy a stirring criterion using ratio thresholds by type of waste material exists in the waste pit 3 in the map received from the crane control unit 11d1, the crane control device 50 may cause the crane 5 to operate to stir the waste material. The stirring criterion may be the same as or different from the feeding criterion.

Further, the crane control device 50 may dynamically change the above-described stirring criterion using one or more of the process data of the incinerator 1, the weather information, the day information, waste carrier information, carried waste amount (a total amount or a carried amount by type of waste material) information, waste carrying speed, waste pit level (whole, specific area) information, crane working situation (two cranes can operate, only one crane operates, one crane is currently operating, two cranes are currently operating) information, and waste collection route/collection area information of waste collection vehicles.

The crane control device 50 may determine the stirring condition of the whole of the waste pit 3 from the ratios of types of waste material for each area in the map received from the crane control unit 11d1, determine whether or not it is necessary to cause two cranes 5 to operate, and cause the crane 5 to operate, and cause the second crane to start operation or store the second crane.

Further, while in the above-described example, the crane control device 50 causes the crane 5 to operate, a crane operation determination device (not illustrated) may be provided upstream of the crane control device 50, the crane operation determination device may determine operation content of the crane 5 and transmit a command of the operation content to the crane control device 50, and the crane control device 50 that has received the command may cause the crane 5 to operate based on the received command content. The crane operation determination device transmits/receives information to/from the information processing device 10 and the crane control device 50. Alternatively, the crane operation determination device may be part of the information processing device 10, that is, the information processing device 10 may include the crane operation determination device.

The crane operation determination device may receive a feeding request signal from the crane control device 50 when a request for feeding is received from the incinerator 1, select waste material in the map which satisfies the feeding criterion using the ratio thresholds by type of waste material from the waste pit 3 based on the map received from the crane control unit 11d1 and transmit a command to the crane control device 50 to feed the waste material into the hopper 4, and the crane control device 50 may cause the crane 5 to operate based on the received command. Further, the crane operation determination device may select waste material so that a difference between the ratio by type of waste material previously fed into the hopper 4 and the ratio by type of waste material to be fed this time becomes small when selecting waste material that satisfies the feeding criterion from the waste pit 3.

In a case where a feeding request signal is received from the crane control device 50 when a request for feeding is received from the incinerator 1, and waste material that satisfies the feeding criterion using the ratio thresholds by type of waste material does not exist in the map received from the crane control unit 11d1, the crane operation determination device may transmit a command to the crane control device 50 to feed waste material close to the feeding criterion into the hopper 4 or stir waste material close to the feeding criterion to create waste material that reaches the feeding criterion, and the crane control device 50 may cause the crane 5 to operate.

The crane operation determination device may transmit a command to the crane control device 50 to pile up only waste material that satisfies the feeding criterion by the ratio thresholds by type of waste material in the map received from the crane control unit 11d1 at a specific portion in the waste pit 3, and the crane control device 50 may cause the crane 5 to operate. By this means, the waste material that satisfies the feeding criterion can be accumulated in the waste pit 3.

The crane operation determination device may transmit a command to the crane control device 50 to detect waste material (for example, sludge) that affects a combustion state or waste material (for example, pruned branches) that causes a trouble in each piece of equipment existing within the waste pit 3 from the ratio thresholds by type of waste material in the map received from the crane control unit 11d1 and accumulate the waste material at a specific portion within the waste pit 3 or scatter the waste material at a specific location, and the crane control device 50 may cause the crane 5 to operate.

In a case where waste material that does not satisfy the stirring criterion using the ratio thresholds by type of waste material exists within the waste pit 3 in the map received from the crane control unit 11d1, The crane operation determination device may transmit a command to the crane control device 50 to stir the waste material, and the crane control device 50 may cause the crane 5 to operate. The above-described stirring criterion may be the same as or different from the feeding criterion.

The crane operation determination device may determine the stirring condition of the whole waste pit 3 from the ratios of the types of waste material for each area in the map received from the crane control unit 11d1, determine whether or not it is necessary to operate two cranes 5 and transmit a command to the crane control device 50, and the crane control device 50 may cause the crane 5 to operate and may cause the second crane to start operation or store the second crane.

Note that while in the above-described embodiment, an example has been described where the information processing device 10 that identifies types of waste material is used in the waste pit 3 of the waste treatment facility 100, a location where the information processing device 10 is used is not limited to the waste pit 3 of the waste treatment facility 100 if the location is a waste accumulation location where waste material is accumulated, and, for example, the information processing device 10 may be used at an acceptance location of a recycle facility.

While the embodiment and the modifications have been described above using examples, the scope of the present technique is not limited to these, and changes and modifications can be made within the scope recited in the claims depending on the purpose. Further, the embodiment and the modifications can be combined as appropriate within a range not causing inconsistency in processing content.

Further, while the information processing device 10 according to the present embodiment can be configured with one or more computers, a program for causing one or more computers to implement the information processing device 10 and a recording medium that records the program in a non-transitory manner are also subjects of protection of the present application.

## Claims

1. An information processing method comprising:
a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types; and
a step of generating a second model that is an identification algorithm that supports waste material in a second facility different from the plurality of facilities by additionally learning second image data obtained by capturing an image of inside of a waste pit of the second facility and second training data in which respective pieces of waste material in the image are labeled with types, with respect to the generated first model.

2. The information processing method according to claim 1, wherein
the second image data and the second training data include a side wall of the waste pit of the second facility and/or a crane that stirs or carries waste material in the image.

3. The information processing method according to claim 1 or 2, wherein
an amount of the second training data is equal to or less than 30% with respect to an amount of the first training data.

4. The information processing method according to claim 3, wherein
the amount of the second training data is equal to or less than 15% with respect to the amount of the first training data.

5. The information processing method according to claim 4, wherein
the amount of the second training data is equal to or less than 5% with respect to the amount of the first training data.

6. The information processing method according to any one of claims 1 to 5, wherein
the identification algorithm includes one or more of statistical estimation, reinforcement learning and deep learning using linear regression, Boltzmann machine, neural network, support vector machine, Bayesian network, sparse regression, decision tree or random forest.

7. The information processing method according to any one of claims 1 to 6, wherein
the second training data includes data in which labeling is performed in a whole of the captured image of inside of the waste pit of the second facility.

8. The information processing method according to any one of claims 1 to 6, wherein
the second training data includes data in which part of the captured image of inside of the waste pit of the second facility is cut out and labeling is performed only in the cutout part.

9. The information processing method according to any one of claims 1 to 8, wherein
the second image data to be used in the step of generating the second model is obtained by inputting the image data obtained by capturing the image of inside of the waste pit of the second facility to the first model, identifying types of waste material and selecting image data with identification accuracy lower than a first reference determined in advance from the image data.

10. The information processing method according to any one of claims 1 to 9, wherein
in the step of generating the first model, information on imaging conditions and/or an imaging environment in each facility are learned together.

11. The information processing method according to any one of claims 1 to 10, wherein
the first image data is obtained by correcting at least one of color tone, brightness or chroma of image data obtained by capturing an image of inside of a waste pit of each facility with reference to a captured image of a color chart for image correction common among the plurality of facilities.

12. The information processing method according to any one of claims 1 to 10, wherein
the first image data is obtained by capturing an image of inside of a waste pit of each facility along with a color chart for image correction common among the plurality of facilities.

13. The information processing method according to any one of claims 1 to 12, wherein
the second image data includes data obtained by synthesizing captured images of waste material within the waste pits of the plurality of facilities or waste material within waste pits of other facilities different from both the plurality of facilities and the second facility, with a rendering image of the side wall of the waste pit and/or the crane that stirs or carries the waste material created based on three-dimensional design data of the second facility.

14. The information processing method according to any one of claims 1 to 13, further comprising:
a step of regularly monitoring identification accuracy during operation after operation of the generated second model is started, and in a case where the identification accuracy becomes lower than a second reference determined in advance, updating the second model by additionally learning image data of waste material at that time and training data in which respective pieces of the waste material in the image are labeled with types, with respect to the second model.

15. The information processing method according to any one of claims 1 to 14, further comprising:
a step of generating a third model that is an identification algorithm that supports waste material of a third facility different from both the plurality of facilities and the second facility by additionally learning third image data obtained by capturing an image of inside of a waste pit of the third facility and third training data in which respective pieces of waste material in the image are labeled with types, with respect to the generated second model.

16. An information processing device comprising:
a first model generation unit that generates a first model that is an identification algorithm of types of waste material by machine learning first image data obtained by capturing images of inside of waste pits of a plurality of facilities in which waste material is accumulated and first training data in which respective pieces of the waste material in the images are labeled with types; and
a second model generation unit that generates a second model that is an identification algorithm that supports waste material of a second facility different from the plurality of facilities by additionally learning second image data obtained by capturing an image of inside of a waste pit of the second facility and second training data in which respective pieces of waste material in the image are labeled with types, with respect to the generated first model.

17. An information processing program for causing a computer to execute:
a step of generating a first model that is an identification algorithm of types of waste material by machine learning first image data obtained by capturing images of inside of waste pits of a plurality of facilities in which waste material is accumulated and first training data in which respective pieces of the waste material in the images are labeled with types; and
a step of generating a second model that is an identification algorithm that supports waste material in a second facility different from the plurality of facilities by additionally learning second image data obtained by capturing an image of inside of a waste pit of the second facility and second training data in which respective pieces of waste material in the image are labeled with types, with respect to the generated first model.

18. An information processing method comprising:
a step of identifying types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.

19. An information processing device comprising:
a type identification unit that identifies types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.

20. An information processing program for causing a computer to execute:
a step of identifying types of waste material accumulated in a waste pit of a second facility using new image data obtained by capturing an image of inside of the waste pit of the second facility as an input using a second model which is an identification algorithm that supports waste material of the second facility and which is generated by, with respect to a first model which is an identification algorithm of types of waste material and which is generated by machine learning first image data obtained by capturing images of inside of waste pits of a plurality of facilities in which waste material is accumulated and first training data in which respective pieces of the waste material in the images are labeled with types, additionally learning second image data obtained by capturing the image of inside of the waste pit of the second facility different from the plurality of facilities and second training data in which respective pieces of the waste material in the image are labeled with types.
